# EUROPÄISCHE PATENTANMELDUNG

(11) **EP 3 065 069 A1**
(43) Veröffentlichungstag der Anmeldung: **07.09.2016**
(21) Anmeldenummer: 16158026.1
(22) Anmeldetag: 01.03.2016
(51) Int. Cl.: G06F 17/30

(54) **VERFAHREN ZUR GEOGRAFISCHEN LOKALISIERUNG EINES OBJEKTS**

(30) Priorität: 05.03.2015 AT 501762015
(71) Anmelder: Zoomsquare GmbH, 1160 Wien (AT)
(72) Erfinder: Langegger, Andreas, 1120 Wien (AT)
(74) Vertreter: Patentanwälte Puchberger, Berger und Partner

(57) **Zusammenfassung**

Die Erfindung betrifft ein Verfahren zur Lokalisierung eines Objekts, wobei aus Adressangaben und gegebenenfalls Nähenangaben zugehörige Polygon- oder Punktkoordinaten des Objekts bestimmt werden, und wobei das Verfahren folgende Schritte umfasst: es wird ein Suchvektor mit mehreren Termen gebildet, wobei die Terme des Suchvektors nach einer vorab definierten Typenhierarchie klassifiziert werden, der Suchvektor wird mit einer vorab bestimmten Geo-Topologie verglichen, wobei die Geo-Topologie eine Vielzahl vorab bestimmter und nach der Typenhierarchie klassifizierter Term-Vektoren umfasst, und es wird aus der Geo-Topologie der kürzeste Term-Vektor ausgewählt, der sämtliche Terme des Suchvektors enthält. Die Erfindung erstreckt sich weiters auf ein Computerprogramm zur Durchführung eines derartigen Verfahrens.

## Beschreibung

Die Erfindung betrifft ein Verfahren zur geografischen Lokalisierung eines Objekts.

Insbesondere bei der Online-Suche nach Immobilien stellt sich das Problem, dass die auf der Angebotsplattform angeführten Immobilien oft nicht mit ihrer vollständigen Adresse angeführt sind, sondern nur näherungsweise Angaben gemacht werden. So wird beispielsweise oft nur ein bestimmtes Stadtviertel oder eine Straße angegeben, und die Vorteile der Immobilie werden durch Nähe-Angaben zu öffentlichen Einrichtungen, Geschäften, oder anderen Punkten von Interesse erläutert.

Aus dem Stand der Technik sind Verfahren zur Geolokalisierung bekannt. Diese Verfahren sind geeignet, Adressangaben in unterschiedlicher Form aufzulösen und daraus eine Positionsangabe zu generieren. Sie scheitern jedoch daran, Näherungsangaben zu verwerten, haben Schwierigkeiten mit mehrdeutigen und fehlerhaften Angaben und sind darauf ausgelegt, exakte Positionsangaben zu liefern. Für den Benutzer wäre aber auch eine näherungsweise Positionsangabe hilfreich.

Weiters sind aus dem Stand der Technik Verfahren zur semantischen Textanalyse bekannt, wobei auch der Kontext der erfassten Wörter berücksichtigt wird (sogenanntes Part-of-speech Tagging). Eine Benutzung dieser Verfahren zur Analyse von Immobilienanzeigen und nachfolgender Geolokalisierung scheitert jedoch daran, dass die bekannten Verfahren zur Geolokalisierung Probleme haben, Mehrdeutigkeiten von Adressangaben (z.B. gibt es zahlreiche Orte namens Loipersdorf in Österreich) aufzulösen.

Weitere Probleme bestehen bei Mehrdeutigkeiten von Worten an sich (z.B. Holz, eine Ortschaft bei Reutte in Tirol) oder bei Doppelangaben (z.B. Ortsname steht mehrfach in der Anzeige). Eine besondere Problematik ergibt sich dann, wenn in einer Anzeige unschlüssige Angaben existieren (z.B. Wien, Praterstern, 1080, Schottenfeldgasse - in diesem Fall muss Praterstern ignoriert werden).

An derartigen inkonsistenten Angaben scheitern alle bekannten Geolokalisierungs-Algorithmen.

Bei der Analyse von Immobilienanzeigen müssen Postleitzahlen ebenso interpretiert werden wie Ordinalzahlen bei Bezirken (z.B. 1. Bezirk, Wien). Eine weitere Problematik ergibt sich dann, wenn sich der angegebene Ort im Ausland befindet. Schließlich besteht ein großes Problem in der Verarbeitung der oft vorliegenden Nähenangaben.

Die Aufgabe der Erfindung besteht darin, die Nachteile der Verfahren aus dem Stand der Technik zu beheben und die oben angeführten Probleme zu lösen. Insbesondere besteht die Aufgabe darin, ein System und ein Verfahren zu schaffen, mit dem auf Basis von mehr oder weniger vollständigen, oft doppeldeutigen Adressangaben und Nähenangaben, die insbesondere aus Immobilienanzeigen automatisch extrahiert werden, eine möglichst exakte Lokalisierung des Objektes zu erreichen.

Diese Aufgabe wird erfindungsgemäß durch ein Verfahren gelöst, bei dem aus Adressangaben und gegebenenfalls Nähenangaben zugehörige Polygon- oder Punktkoordinaten des Objekts bestimmt werden, wobei das Verfahren folgende Schritte umfasst: Zunächst wird für den betrachteten geografischen Bereich eine topologische Typenhierarchie definiert, welche topologische Typen wie insbesondere Land, Bundesland, politischer Bezirk, Gemeinde oder Stadt, Stadtbezirk, Stadtviertel, Ortschaft, Straße, Ort von Interesse, öffentliche Verkehrslinie, und Station des öffentlichen Verkehrs in hierarchische absteigende Reihenfolge setzt. Danach wird eine Geo-Topologie aufgestellt, die eine Vielzahl nach der Typenhierarchie klassifizierter Term-Vektoren umfasst, wobei für jede mögliche Adresskombination des betrachteten geografischen Bereichs zumindest ein Term-Vektor erzeugt wird. Danach wird aus den Adresseingaben ein Suchvektor mit mehreren Termen gebildet, wobei die Terme des Suchvektors nach der Typenhierarchie klassifiziert werden. Danach wird der Suchvektor mit der Geo-Topologie verglichen. Schließlich wird aus der Geo-Topologie der kürzeste Term-Vektor ausgewählt, der sämtliche Terme des Suchvektors enthält. Erfindungsgemäß kann vorgesehen sein, dass in einem weiteren Verfahrensschritt geprüft wird, ob der identifizierte Term-Vektor eine Straße repräsentiert und die Adressangabe eine Hausnummer umfasst, worauf die zugehörigen Punktkoordinaten durch Geocodierung mittels Abfrage einer Adressdatenbank ermittelt werden.

Erfindungsgemäß kann vorgesehen sein, dass in einem weiteren Verfahrensschritt geprüft wird, ob der identifizierte Term-Vektor eine Straße repräsentiert und die Adressangabe eine Hausnummer umfasst, und falls dies nicht der Fall ist, Nähenangaben des Objekts zur Lokalisierung des Objekts herangezogen werden.

Erfindungsgemäß kann vorgesehen sein, dass aus zumindest einer Nähenangabe zumindest ein weiterer Suchvektor mit mehreren Termen bestimmt wird, wobei die Terme des weiteren Suchvektors nach der Typenhierarchie klassifiziert werden, und folgende zusätzliche Schritte ausgeführt werden: Der weitere Suchvektor wird mit der vorab bestimmten Geo-Topologie verglichen. Danach wird aus der Geo-Topologie der kürzeste Term-Vektor ausgewählt, der sämtliche Terme des weiteren Suchvektors enthält. Schließlich werden die aus den Adressangaben identifizierten Polygonkoordinaten um die aus den Nähenangaben identifizierten Polygonkoordinaten erweitert oder eingeschränkt, vorzugsweise geschnitten. Diese Berücksichtigung der Nähenangaben erlaubt sowohl eine Einschränkung der aus den Adressangaben identifizierten Polygonkoordinaten, als auch eine Erweiterung. Werden mehrere Nähenangaben verwendet, können als Ergebnis auch mehrere Polygonkoordinaten resultieren. Wenn die resultierenden Polygonkoordinaten überlappen, kann erfindungsgemäß ein Überschneidungsbereich gebildet werden; andernfalls wird erfindungsgemäß eine konkave Hülle um die Polygone gelegt.

Erfindungsgemäß kann vorgesehen sein, dass die Vektoren für Adressangaben Terme umfassen, die als Tupel (*t, h, T, C*) ausgeführt sind, wobei *t* den Namen des Ortes, *h* eine optionale Hausnummer, *T* eine Liste möglicher topologischer Typen, und C eine Liste möglicher Länder bezeichnet.

Erfindungsgemäß kann vorgesehen sein, dass die Vektoren für Nähenangaben Terme umfassen, die als Tupel (*k, i, d*) ausgeführt sind, wobei *k* die Art der Nähenangabe, *i* eine diesbezügliche Information, und deine optionale Distanz bezeichnet.

Erfindungsgemäß kann vorgesehen sein, dass als Art der Nähenangabe ein in der Nähe liegender Ort oder Punkt von Interesse, eine Straßenkreuzung, der Name einer Linie oder Station des öffentlichen Verkehrs, oder eine sonstige Distanzangabe herangezogen wird.

Erfindungsgemäß kann vorgesehen sein, dass die Terme des Suchvektors und gegebenenfalls auch die Terme des zumindest einen weiteren Suchvektors durch Benutzereingaben gebildet oder durch semantische Analyse aus Texten, insbesondere Immobilienanzeigetexten, extrahiert werden.

Erfindungsgemäß kann vorgesehen sein, dass die Geo-Topologie in Form einer hierarchischen Baumstruktur aufgebaut ist, wobei topologische Typen nach einer hierarchischen Ordnung sortiert sind, wobei absteigend von einem höchsten topologischen Typ jedem Typ zumindest ein übergeordneter Typ sowie gegebenenfalls untergeordnete Typen zugeordnet sind.

Erfindungsgemäß kann vorgesehen sein, dass die topologischen Typen Terme umfassen, die als Tupel (T, n, S, Z, g, P, J) ausgeführt sind, wobei T den semantischen Typ bezeichnet, n den Namen, S dessen Synonyme, Z zumindest eine Postleitzahl bei Gemeinden und Bezirken, g eine Geometrie, P die Referenzen zur Definition der Hierarchie, sowie J optionale weitere vorberechnete Daten.

Erfindungsgemäß kann vorgesehen sein, dass als topologische Typen das Land, das Bundesland, der politische Bezirk, die Gemeinde oder Stadt, der Stadtbezirk, das Stadtviertel, die Ortschaft, die Straße, einen Ort von Interesse, eine öffentliche Verkehrslinie, eine Station des öffentlichen Verkehrs, oder andere Typen vorgesehen sind.

Erfindungsgemäß kann vorgesehen sein, dass für den Vergleich des Suchvektors mit der Geo-Topologie die Terme des Suchvektors auf Grundlage einer vorbestimmten Rangordnung permutiert werden und die permutierten Suchvektoren mit den Term-Vektoren der Geo-Topologie verglichen werden, bis jener kürzeste Term-Vektor der Geo-Topologie identifiziert wird, der sämtliche Terme des permutierten Suchvektors enthält.

Erfindungsgemäß kann vorgesehen sein, dass bestimmte Terme der Suchvektoren aufgrund ihrer Lage im Text höher gewichtet werden.

Erfindungsgemäß kann vorgesehen sein, dass zur Erweiterung der aus den Adressangaben identifizierten Polygonkoordinaten um die aus den Nähenangaben identifizierten Polygonkoordinaten eine konkave Hülle um vorzugsweise alle identifizierten Polygonkoordinaten gebildet wird.

Erfindungsgemäß kann vorgesehen sein, dass bei der Erweiterung der aus den Adressangaben identifizierten Polygonkoordinaten um die aus den Nähenangaben identifizierten Polygonkoordinaten eine vorab bestimmte Pufferzone um den Überschneidungsbereich gebildet wird.

Erfindungsgemäß kann vorgesehen sein, dass die Größe der Pufferzone in Abhängigkeit von dem aus den Nähenangaben identifizierten Term-Vektor gebildet wird.

Erfindungsgemäß kann vorgesehen sein, dass die Größe der Pufferzone in Abhängigkeit von weiteren im Text identifizierten Merkmalen, insbesondere einer identifizierten Distanzangabe, bestimmt wird.

Die Erfindung erstreckt sich weiters auf ein Computerprogramm zur Durchführung eines erfindungsgemäßen Verfahrens.

Weitere erfindungsgemäße Merkmale ergeben sich aus den Patentansprüchen, der Beschreibung der Ausführungsbeispiele und den Figuren.

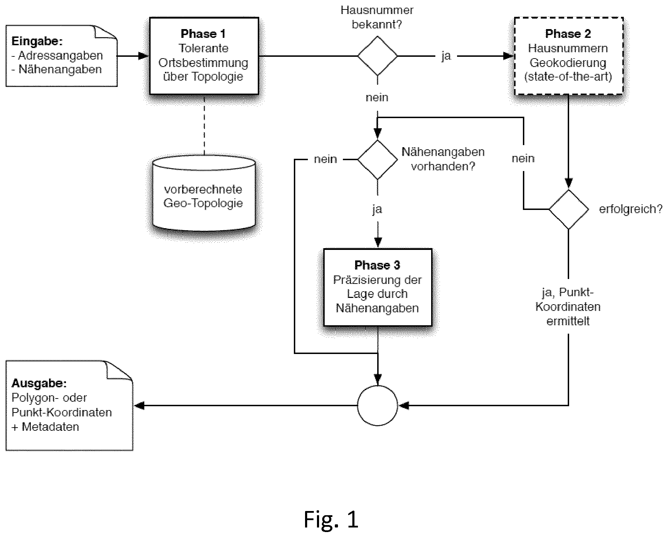

Fig. 1 zeigt ein beispielhaftes und nicht einschränkendes Ausführungsbeispiel eines erfindungsgemäßen Verfahrens zur Lokalisierung eines Objekts. Eingangsparameter des Verfahrens sind Adressangaben und gegebenenfalls Nähenangaben des gesuchten Objekts, welche vorzugsweise aus Immobilienanzeigen extrahiert wurden, aber auch aus Benutzereingaben stammen können, sowie eine vorberechnete Geo-Topologie.

Das Verfahren umfasst im Wesentlichen drei Phasen. In Phase 1 werden die Adressangaben herangezogen, um durch Vergleich mit einer vorberechneten Geo-Topologie die Geo-Entität zu bestimmen, in der das Objekt liegt.

Je nach Detailgrad der Adressangaben ist diese Geo-Entität, und somit das Ergebnis der Phase 1, eine Straße, Nachbarschaft, Stadtviertel, Stadtbezirk, Gemeinde, Ortschaft, politischer Bezirk, Bundesland, ein ganzes Land, oder eine andere Geo-Entität.

Das Ergebnis aus Phase 1 kann mehrdeutig sein, so ergibt beispielsweise die Adressangabe (at, Loipersdorf) keinen eindeutigen Ort. In diesem Fall werden alle möglichen Ergebnisse weiter verarbeitet.

Danach wird geprüft, ob eine der in Phase 1 identifizierten Geo-Entitäten eine Straße repräsentiert und die Adressangabe eine Hausnummer enthält. Ist dies der Fall, dann erfolgt in Phase 2 eine Geokodierung mit diesen Angaben, wobei bekannte Algorithmen zur Geokodierung herangezogen werden. In diesem Fall können in der Regel exakte Punktkoordinaten ermittelt werden, und die Auswertung etwaiger Nähenangaben in Phase 3 ist nicht erforderlich.

Sollte in Phase 1 kein exakter Ort mit Straße und Hausnummer ermittelt worden sein, oder falls die Geokodierung in Phase 2 erfolglos war, erfolgt in Phase 3 eine Präzisierung der in Phase 1 durchgeführten Ortsbestimmung auf Basis der eingangs ermittelten Nähenangaben. In diesem Fall werden als Ergebnis Polygon-Koordinaten zurückgeliefert.

Endprodukt des Verfahrens sind Polygon- oder Punktkoordinaten des gesuchten Objekts.

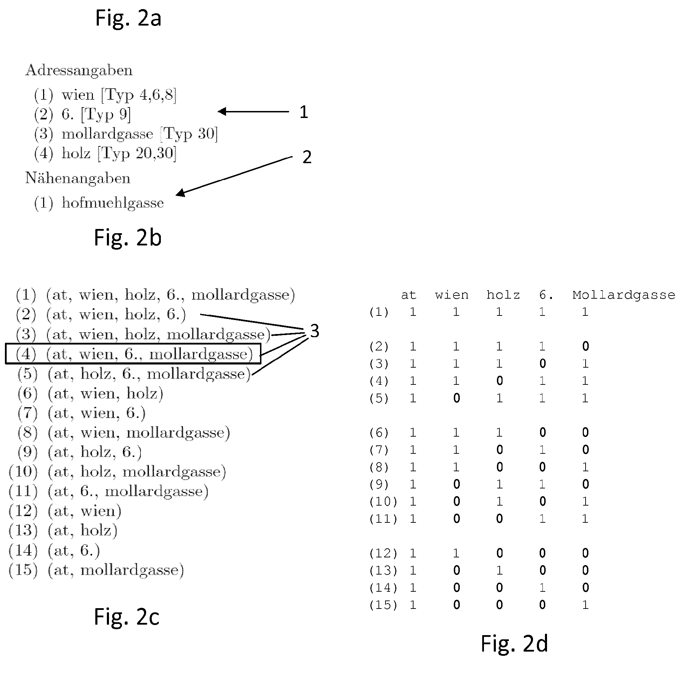

Zur weiteren Beschreibung dient die in Fig. 2a dargestellte beispielhafte Immobilien-Anzeige. Diese wird durch eine nicht näher beschriebene semantische Analyse verarbeitet, welche die in Fig. 2b dargestellten Adress- und Nähenangaben liefert.

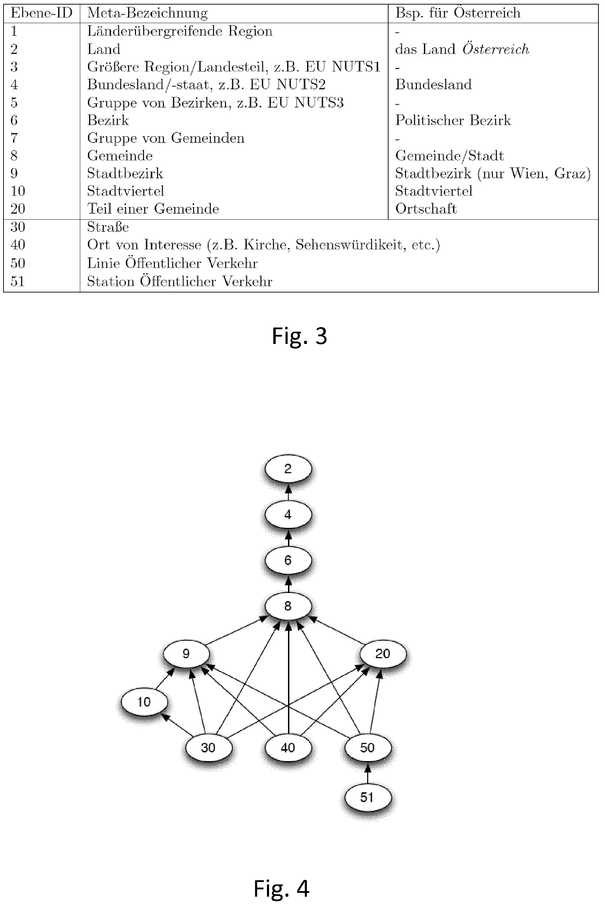

Adressangaben und Nähenangaben werden im Rahmen des vorliegenden Ausführungsbeispiels wie folgt formalisiert: Jede Adressangabe ist als Tupel aᵢ = (t, h, T,C) beschrieben, wobei die Abkürzungen folgende Bedeutung haben:
- t (Text-Token):: der jeweilige Namen des Orts (z.B. Wien)
- h (Hausnummer):: die optionale Hausnummer einer Straße
- T (Typen):: eine Liste möglicher topologischer Typen wie in Fig. 3 definiert. Manche Bezeichnungen können mehrere Typen bezeichnen, z.B. das Wort Loipersdorf kann in Österreich eine Straße, Ortschaft oder Gemeinde bezeichnen
- C (Länder):: eine Liste aller Länder in denen dieser Name bekannt ist; z.B. kommt Mauern nicht nur in Österreich, sondern auch in Deutschland vor.

Im vorliegenden Beispiel aus Fig. 2a ergeben sich die in Fig. 2b dargestellten Adressangaben. Die in eckigen Klammern zu jeder Adress- und Nähenangabe hinzugefügten Typen beziehen sich auf die in der vorab bestimmten Geo-Topologie codierten Topologie-Typen. In Vektorschreibweise stellen sich die ermittelten Terme wie folgt dar:
a₁ = (wien, *null,* {4, 6, 8}, {at})
a₂ = (6., *null,* {9}, {at})
a₃ = (mollardgasse, *null,* {30}, {at})
a₄ = (holz, *null,* {20, 30}, {at})

Die hier nicht näher beschriebene semantische Analyse hat zwar die Adresse des Anbieters aus der Anzeige in Fig. 2a (Schubertring 23, Wien) erkannt und erfolgreich isoliert (denn es handelt sich dabei nicht um die Objektadresse), allerdings ist fehlerhaft der Begriff Holz als Ortschaft in die Adressangabe a₄ aufgenommen worden.

Fig. 3 zeigt die Meta-Bezeichnungen aller codierten topologischen Typen der im vorliegenden Ausführungsbeispiel verwendeten Geo-Topologie. Nicht für jedes Land müssen alle Typen Verwendung finden. So werden z.B. für Österreich, wie in Fig. 3 dargestellt, nur die Typen 2, 4, 6, 8, 9, 10, 20, 30, 40, 50, 51 verwendet.

Ebenen mit höherem Typ sind in der Regel Untergruppen von Ebenen mit niedrigerem Typ. Fig. 4 zeigt die im vorliegenden Ausführungsbeispiel verwendete hierarchische Anordnung der verschiedenen Typen der verwendeten Geo-Topologie. Die Erfindung ist aber nicht auf diese hierarchische Ausformung beschränkt, sondern umfasst auch Verfahren unter Verwendung von in anderen Strukturen vorliegenden Geo-Topologien.

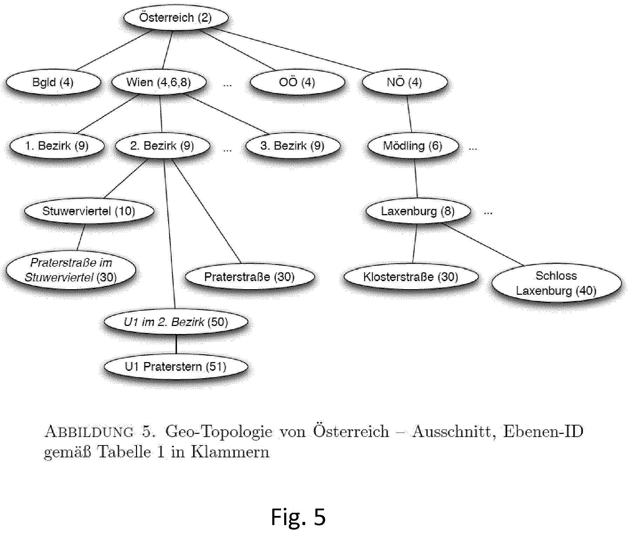

Ein Ausschnitt aus der Geo-Topologie für Österreich ist in Fig. 5 veranschaulicht, wobei die dargestellten Ebenen-IDs Fig. 2 entsprechen. Die Ebenen-IDs sind entsprechend der hierarchischen Ordnung sortiert, d.h. ein Elternknoten hat immer eine niedrigere Ebenen-ID als seine Kinder.
Ebenen ab ID 30 (also insbesondere Straßen, Orte von Interesse und öffentliche Verkehrslinien) können optional mehreren Eltern zugeordnet sein - so können z.B. Straßen in Straßensegmente unterteilt und unterschiedlichen Stadtteilen zugeordnet werden (z.B. Mariahilfer Straße, 1150 vs. Mariahilfer Straße, 1060 vs. Mariahilfer Straße, 1070, usw.).

Jeder Knoten in dieser Geo-Topologie O kann beschrieben werden als Tupel (T,n,S,Z, g,P, J), wobei die Terme folgende Bedeutung haben:
- T:: die semantischen Typen eines Geo-Entität-Knotens, wie in Fig. 3 definiert. Mehrere sind möglich, so ist Wien z.B. zugleich Bundesland, politischer Bezirk und Gemeinde.
- n:: der Name (Ortsname, Straßenname, etc.)
- S:: Synonyme (z.B. Stmk für Steiermark)
- Z:: Postleitzahlen (nur bei Gemeinden und Stadtbezirken).
- g:: Geometrie (Polygon-/Linien-/Punkt-Koordinaten)
- P:: Eltern- und Großeltern-Referenzen, geordnet; Wien hat z.B. nur eine Referenz auf Österreich, St. Pölten Stadt hat als Eltern (Bezirk St. Pölten, Niederösterreich, Österreich) - diese Beziehungen definieren die logische Hierarchie der Topologie
- J:: optionale, weitere vorberechnete Daten, u.a. ein Bezeichner mit Kontext (z.B. Sandleitengasse, 1060 Wien), Topologie-Information mit Eltern-Daten, eine Geometrieversion mit niedriger Auflösung zur schnellen Darstellung im Web, etc.

Vor Durchführung des Verfahrens wird eine Menge von Term-Vektoren V auf Basis von n, S, Z, sowie der Hierarchie-Information über P vorberechnet. Diese vorberechneten Term-Vektoren stellen den Kern für das Verfahren in Phase 1 dar. Ein solcher vorberechneter Term-Vektor besteht aus einfachen Termen (normalisierte Namen von Bundesländern, Orten, Straßen, etc.). Bei der Normalisierung werden unterschiedliche Schreibweisen von Namen erkannt und auf eine einheitliche Schreibweise abgeändert, um ein gewisses Maß an Schreibungstoleranz zu erlauben.

Für jede mögliche Adresskombination (bis auf Straßenebene, also ohne Hausnummer) gibt es mindestens einen Term-Vektor als Teil der Topologie, um schnelle Abfragen zu ermöglichen. Zum Beispiel sind für die Mollardgasse, Mariahilf, Wien folgende Term-Vektoren vorgesehen:
(1) (at, wien, mariahilf, mollardgasse)
(2) (oesterreich, wien, mariahilf, mollardgasse)
(3) (at, wien, mariahilf, 1060, mollardgasse)
(4) (oesterreich, wien, mariahilf, 1060, mollardgasse)
(5) (at, wien, 6., mollardgasse)
(6) (oesterreich, wien, 6., mollardgasse)
(7) (at, wien, 1060, 6., mollardgasse)
(8) (oesterreich, wien, 1060, 6., mollardgasse)
(9) (at, oesterreich, wien, mariahilf, 1060, 6., mollardgasse)

Die Ortsnamen in den Term-Vektoren sind bereits normalisiert, sodass ein gewisser Grad an Schreibungstoleranz ermöglicht wird. Ein höherer Grad an Schreibungstoleranz kann durch weitere N-Gramm Permutationen erreicht werden.

Auch ISO Länder-Kürzel (z.B. at für Österreich) sowie auch Ländernamen sind in den Term-Vektoren der Topologie kodiert. Außerdem sind die Term-Vektoren unabhängig von der jeweiligen politischen Gliederung in z.B. Bundesländer, Regionen, Gemeinden, etc. eines Landes. Damit ist in einem holistischen Ansatz eine internationale Geokodierung möglich.

Das Kernverfahren in Phase 1 ist die Suche nach dem kürzesten Term-Vektor, der alle Terme des Suchvektors enthält. Damit wird gewährleistet, dass jener Ort gefunden wird, der bei den gegebenen Informationen am wahrscheinlichsten gemeint ist, auch wenn einzelne Terme eines Term-Vektors möglicherweise nicht berücksichtigt werden.

Für jeden Suchvektor ist über die Typen in den Adressangaben jene Topologie-Ebene bekannt, auf die er abzielt (im Beispiel die Mollardgasse mit Ebenen-ID 30). Deshalb werden bei der Suche prinzipiell nur Term-Vektoren betrachtet, die Geo-Entitäten aus dieser Ebene referenzieren.

Um umgekehrt auch eine gewisse Toleranz für teilweise falsche oder irreführende Adressangaben zu ermöglichen, werden die Adressangaben permutiert und es wird für verschiedene Term-Teilmengen getestet, ob eine reale Adresse innerhalb der Geo-Topologie bekannt ist.

Ein solcher Test entspricht der Suche nach dem kürzesten Term-Vektor aus V, der sämtliche Terme des Suchvektors enthält. Um mit möglichst wenigen Tests zum Ergebnis zu kommen werden, unter anderem, folgende Regeln angewendet:
- Es sollen nie zwei Orte mit gleichem Typ zugleich getestet werden (es kann keine Adresse mit zwei unterschiedlichen Straßen, Gemeinden, etc. geben).
- Es sollen mindestens x und maximal y Ortsnamen zugleich getestet werden (damit kann die Toleranz und Anzahl Tests - also die Geschwindigkeit - gesteuert werden).
- Vorbestimmung des Landes: es wird jenes Land angenommen das in den Adressangaben am häufigsten vorkommt. Sollte also ein ausländischer Ort in der Eingabe existieren, wird dieser einfach ignoriert, sofern genug andere Adressangaben vorhanden sind. Das Land kann auch explizit mit Typ 2 als Adressangabe angegeben werden. Es werden dann nur Adressangaben dieses Landes berücksichtigt.
- Sollte das bestimmte Land nicht in der Geo-Topologie unterstützt werden, wird abgebrochen - es konnte dann kein Ergebnis bestimmt werden. Sofern die Ortsnamen der Eingabe noch nicht normalisiert sind, werden sie normalisiert.

Weiters ist vorgesehen, dass bei der Erstellung der Permutationsliste einer vordefinierten Typen-Rangordnung gefolgt wird. So kann vorgesehen sein, dass der Typ Land die höchste Priorität besitzt, während die Typen Bundesland und Straße jeweils niedrigere Priorität aufweisen. Die Terme werden dann in der Reihenfolge ihrer Rangordnung permutiert.

So kann vorgesehen sein, dass die Geo-Entität Straße die niedrigste Priorität aufweist, gefolgt von Nachbarschaft, Stadtviertel, Stadtbezirk, Gemeinde, Ortschaft, Politischer Bezirk, Bundesland sowie Land. Einzelne Geo-Entitäten können auch gleiche Prioritäten aufweisen.

Die Liste an Permutationen ist bei dem vorliegenden Ausführungsbeispiel der Immobilien-Anzeige aus Fig. 2a in Fig. 2c dargestellt. Im vorliegenden Ausführungsbeispiel wird bereits beim 4. Versuch der Term-Vektor (at,wien, 6.,mollardgasse) in der Geo-Topologie gefunden, welcher sämtliche Terme des permutierten Suchvektors enthält.

Die zur Erstellung der Permutationsliste abgearbeitete Systematik ist in Fig. 5d schematisch dargestellt. Je nach Priorisierung der Typenordnung kann auch eine andere Systematik entstehen. So kann insbesondere vorgesehen sein, dass die Reihenfolge der Typen, die zuerst getestet werden, je nach Land unterschiedlich ist.

Folgende Möglichkeiten sind zur Steuerung und Optimierung des Verfahrens vorgesehen:
- Limitierung der maximalen Tests
- Mindest- und Maximal-Anzahl an Ortsnamen für eine Permutation
- Maximale Anzahl an Ortsnamen die pro Typ getestet werden (z.B. wenn 10 Straßen in der Eingabe sind, werden nur ein paar getestet um die Anzahl der Permutationen einzuschränken)
- Relevanz-Gewichte können jedem Ortsnamen bereits von der semantischen Analyse je nach Lage im Text zugewiesen werden -je relevanter ein Ortsname, desto früher wird er in Permutationen getestet
- Tests der Permutationen werden mit einer einfachen Datenbankabfrage ausgeführt (preflight tests), erst wenn ein Ergebnis gefunden wurde (hit) wird die Geo-Entität mit weiteren Daten (Polygon-Geometrie) aus der Geo-Topologie geladen.

Die Geokodierung per Hausnummer in der zweiten Phase erfolgt - sofern eine Hausnummer bekannt ist - mittels Adressdatenbank-Abfragen. Hierbei werden die in Phase 1 lokalisierte Straße und Gemeinde, sowie die Hausnummer für eine einfache Abfrage verwendet, um die Koordinaten zu bestimmen. Das Ergebnis sind also Breitengrad und Längengrad des Punktes auf den die Hausnummern-Adresse verweist. Da keine genauere Lokalisierung als ein Punkt möglich ist, endet das Verfahren an dieser Stelle bereits.

Sofern allerdings kein Ergebnis gefunden werden kann bzw. falls überhaupt keine Hausnummer vorhanden ist, wird mittels Nähenangaben in Phase 3 die Lage angenähert.

Die Basis für die Präzisierung an Hand von Nähenangaben in Phase 3 bildet ebenfalls die vorberechnete Geo-Topologie. Diese umfasst auch Orte von Interesse wie Kirchen, Schulen, Veranstaltungshallen, Bahnhöfe, Verwaltungsgebäude oder Sehenswürdigkeiten.

Ausgangspunkt ist die in Phase 1 bestimmte Geo-Entität, wie beispielsweise Straße, Nachbarschaft, Stadtviertel, Stadtbezirk, Gemeinde, Ortschaft, Politischer Bezirk, Bundesland, etc. Im Fall einer Straße wird die übergeordnete Geo-Entität (z.B. Gemeinde), in der diese liegt, als Bezugsraum für jede weitere Verfeinerung herangezogen, in allen anderen Fällen die gefundene Geo-Entität selbst (also z.B. Gemeinde oder Bundesland). Innerhalb dieses Bezugsraums werden im Folgenden alle bekannten Nähenangaben gesucht. Anschließend werden die Ergebnispolygone mit dem Bezugsraum so verschnitten, dass ein möglichst präzises Zielpolygon entsteht, welches als Ergebnis gilt.

Nähenangaben werden im vorliegenden Ausführungsbeispiel als Liste N codiert. Jede Nähenangabe nᵢ kann als Tupel nᵢ = (k, l, d) beschrieben werden, wobei die Terme folgende Bedeutung haben:
- k (Art):: Art der Nähenangabe: *nearby, crossing* oder *pt* (public transport).
- l (Informationen):: Je nach Art k werden unterschiedliche Informationen festgehalten:
- *nearby:*: In diesem Fall enthält l einen Ortsnamen, der in der Nähe liegt
- *crossing:*: In diesem Fall enthält l zwei Straßennamen die sich schneiden
- *pt:*: hier enthält l den Namen einer öffentlichen Verkehrslinie und/oder Station
- d (Distanz):: In allen Fällen kann eine optionale Distanz in Meter oder Minuten spezifiziert werden.

Beispiele für Nähenangaben sind wie folgt:
(1) n₁ = (*nearby,* hofmuehlgasse)
(2) n₂ = (*nearby,* hofmuehlgasse, 100, Meter)
(3) n₃ = (*crossing,* {schottenfeldgasse, burggasse})
(4) n₄ = (*pt,* (u4))
(5) n₅ = (*pt,* (u4, huetteldorf), 5, Minuten)

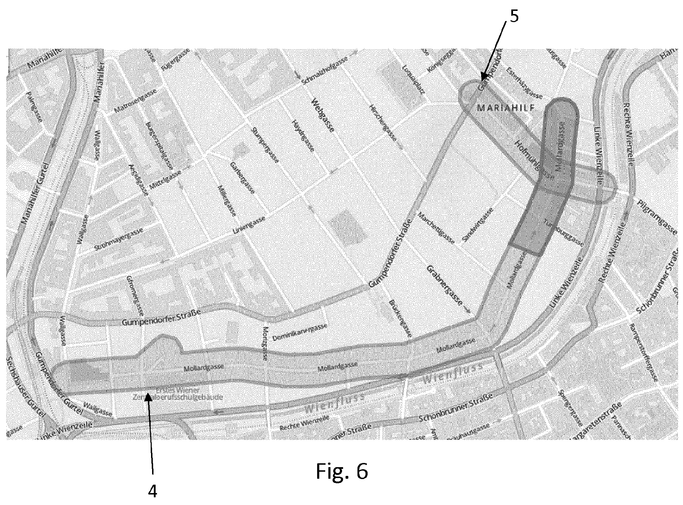

Im gegebenen Beispiel konnte im Bezugsraum Wien eine Straße mit dem Namen Hofmuehlgasse gefunden werden. Die Verschneidung des in Phase 1 aus den Adressangaben ermittelten Polygons 4 mit dem in Phase 3 aus den Nähenangaben ermittelten Polygons 5 ergibt das in Fig. 6 gezeigte Resultat.

Die retournierte Bezeichnung der genäherten Adresse aus Phase 1 wird in Phase 3 mittels Bezugsraum (z.B. Mollardgasse, Wien) und einem Zusatz für erfolgreich kombinierte Nähenangaben erweitert (z.B. Mollardgasse, Nähe Hofmühlgasse, Wien).

Dabei gilt als Bezugsraum grundsätzlich das Ergebnis aus Phase 1: falls es sich um ein Areal (Polygon) handelt gilt dieses als Bezugsraum, falls es sich um eine Linie (z.B. Straße) handelt, gilt der nächste Eltern-Knoten als Bezugsraum (z.B. ein Stadtviertel in dem die Straße liegt).

Je nach Art der Nähenangabe wird unterschiedlich verfahren:
- *nearby:*: Der Ort l wird wie in Phase 1 mittels der Anfrage (Land, Bezugsraum, l) über Term-Vektoren aus der Geo-Topologie bestimmt. Zum Beispiel sei gegeben: Bezugsraum Mariahilf (bestimmt über Mollardgasse) und Nähenangabe aus dem Beispiel n₁ = (nearby, hofmuehlgasse), ergibt Anfrage-Vektor (at, wien, mariahilf, hofmuehlgasse) der hier zu einem Ergebnis führt. Das in der Geo-Topologie gespeicherte Geometrieobjekt des Ergebnisses wird nun mit einem sogenannten Puffer im Abstand von x Metern vergrößert. Falls der Ort nicht gefunden wird, wird die Nähenangabe einfach ignoriert.
- *crossing:*: Ähnlich wie im ersten Fall werden hier zwei Straßen auf Basis des Bezugsraums wie in Phase 1 abgefragt. Die Straßen werden ebenfalls mit x Metern gepuffert und die resultierenden Polygone werden verschnitten, sodass sich ein Polygon ergibt welches die Kreuzung beschreibt.

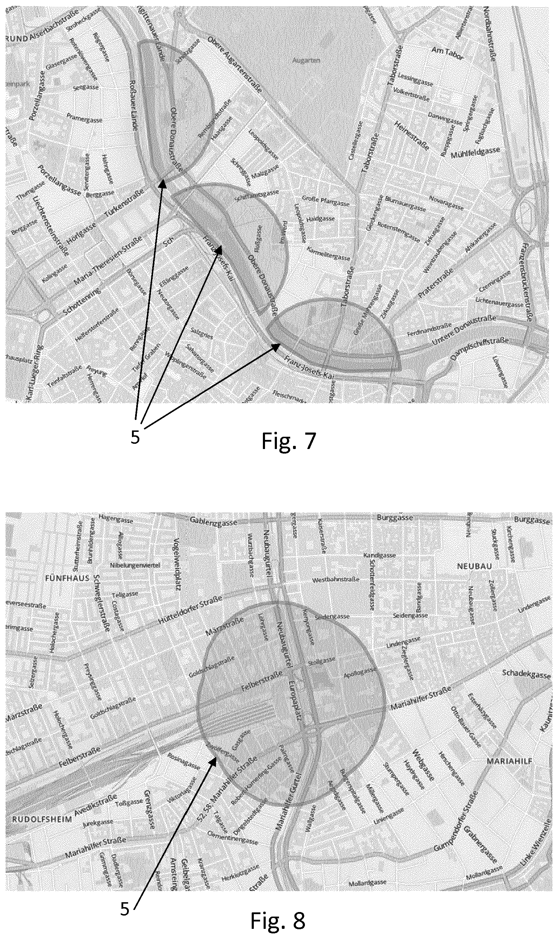

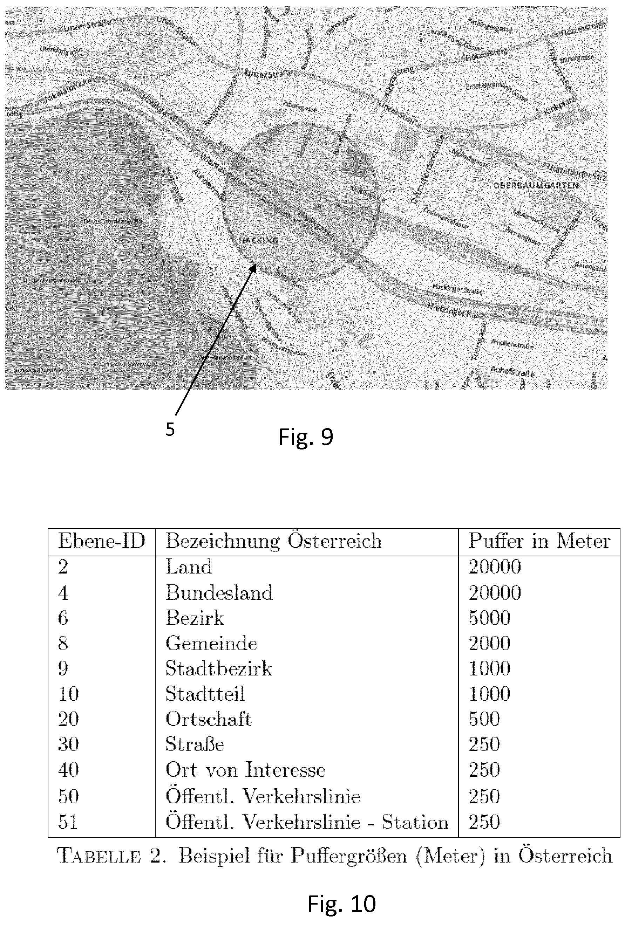

*pt:* Falls öffentlicher Verkehr als Nähenangabe vorliegt, gibt es drei Möglichkeiten:
- Linie: z.B. U4, wobei hier alle Stationen im Bezugsraum das Ergebnis bilden. Die Punkte werden mit x Metern gepuffert und ergeben Polygone die den Umkreis der Station beschreiben (beispielhaft in Fig. 7 dargestellt).
- Station: z.B. Westbahnhof, wobei hier alle Stationen im Bezugsraum mit diesem Namen (in der Regel nur eine) selektiert werden und deren Punkte mit x Metern gepuffert werden (beispielhaft in Fig. 8 dargestellt).
- Linie mit Station: z.B. U4 Hütteldorf, wobei hier nur die Station Hütteldorf der Linie U4 im Bezugsraum selektiert und deren Punkt gepuffert wird, sodass ein Kreis entsteht (beispielhaft in Fig. 9 dargestellt).

Abschließend werden die (gepufferten) Polygone der Ergebnisse der einzelnen Nähenangaben kombiniert indem eine konkave Hülle darüber gebildet wird. Das Polygon, das durch diese Hülle beschrieben wird, bildet das Endergebnis von Phase 3.

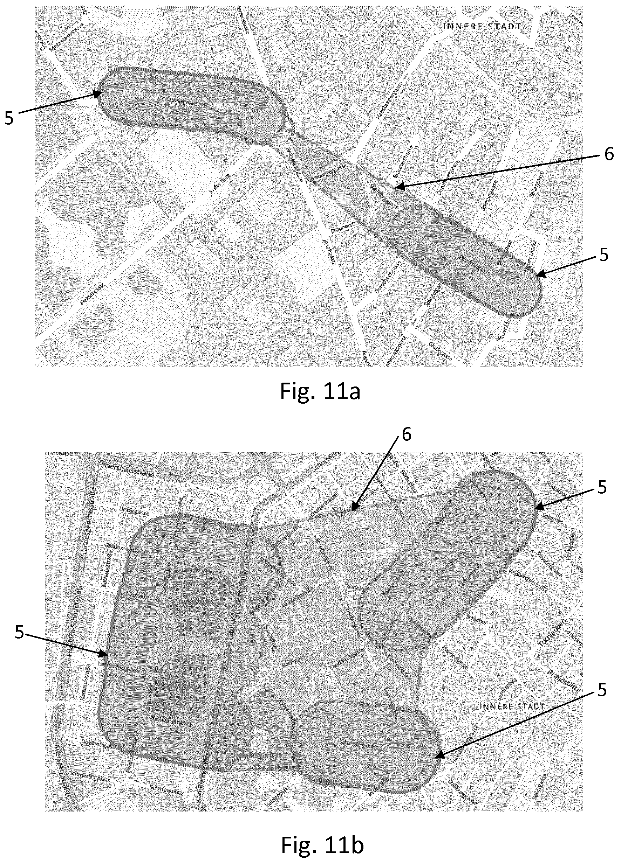

Fig. 11a zeigt beispielhaft ein resultierendes Polygon für den Suchvektor (wien, innere Stadt, Nähe Schaflergasse und Plankengasse) unter Verwendung einer konkaven Hülle 6, welche die beiden, aus unterschiedlichen Nähenangaben resultierenden, Polygone miteinander verbindet.

Fig. 11b zeigt beispielhaft ein weiteres resultierendes Polygon für den Suchvektor (wien, 1. Bezirk Nähe Rathausplatz, Tiefer Graben und Schauflergasse) unter Verwendung einer konkaven Hülle 6, welche drei aus unterschiedlichen Nähenangaben resultierende Polygone miteinander zu einem einzigen Polygon verbindet

Die Puffer-Distanz x wird entweder durch eine in der jeweiligen Nähenangabe optional vorhandenen Distanz d (Meter oder Minuten - im letzteren Fall wird auf Luftlinien-Meter bei Gehgeschwindigkeit umgerechnet) bestimmt oder auf Basis der Ebenen-ID des Ergebnisses: je größer der Bezugsraum, desto größer der Default-Pufferwert in Meter.

Ein Beispiel für eine Konfiguration der Pufferwerte für Österreich ist in Fig. 10 gegeben. Der Wert könnte auch von der Fläche/Umfang des Ergebnispolygons abhängig gemacht werden.

Die Erfindung beschränkt sich nicht auf die dargestellten Ausführungsbeispiele, sondern umfasst sämtliche Verfahren im Rahmen der nachfolgenden Patentansprüche.

## Patentansprüche

1. Verfahren zur Lokalisierung eines Objekts, wobei aus Adressangaben und gegebenenfalls Nähenangaben zugehörige Polygon- oder Punktkoordinaten des Objekts bestimmt werden,
**dadurch gekennzeichnet, dass** das Verfahren folgende Schritte umfasst:
- es wird für den betrachteten geografischen Bereich eine topologische Typenhierarchie definiert, welche topologische Typen wie insbesondere Land, Bundesland, politischer Bezirk, Gemeinde oder Stadt, Stadtbezirk, Stadtviertel, Ortschaft, Straße, Ort von Interesse, öffentliche Verkehrslinie, und Station des öffentlichen Verkehrs in hierarchische absteigende Reihenfolge setzt,
- es wird eine Geo-Topologie aufgestellt, die eine Vielzahl nach der Typenhierarchie klassifizierter Term-Vektoren (3) umfasst, wobei für jede mögliche Adresskombination des betrachteten geografischen Bereichs zumindest ein Term-Vektor (3) erzeugt wird,
- es wird aus den Adressangaben ein Suchvektor (1) mit mehreren Termen gebildet, wobei die Terme des Suchvektors nach der Typenhierarchie klassifiziert werden,
- der Suchvektor (1) wird mit der Geo-Topologie verglichen, und
- es wird aus der Geo-Topologie der kürzeste Term-Vektor (3) ausgewählt, der sämtliche Terme des Suchvektors (1) enthält.

2. Verfahren nach Anspruch 1, **dadurch gekennzeichnet, dass** in einem weiteren Verfahrensschritt geprüft wird, ob der identifizierte Term-Vektor (3) eine Straße repräsentiert und die Adressangabe eine Hausnummer umfasst, worauf die zugehörigen Punktkoordinaten der Hausnummer durch Geocodierung mittels Abfrage einer Adressdatenbank ermittelt werden, und falls dies nicht der Fall ist, Nähenangaben des Objekts zur Lokalisierung des Objekts herangezogen werden.

3. Verfahren nach Anspruch 2, **dadurch gekennzeichnet, dass** aus zumindest einer Nähenangabe zumindest ein weiterer Suchvektor (2) mit vorzugsweise mehreren Termen bestimmt wird, wobei die Terme des weiteren Suchvektors nach der Typenhierarchie klassifiziert werden, und folgende zusätzliche Schritte ausgeführt werden:
- der weitere Suchvektor wird mit der vorab bestimmten Geo-Topologie verglichen,
- es wird aus der Geo-Topologie der kürzeste Term-Vektor ausgewählt, der sämtliche Terme des weiteren Suchvektors enthält,
- die aus den Adressangaben identifizierten Polygon koordinaten (4) werden um die aus den Nähenangaben identifizierten Polygonkoordinaten (5) erweitert oder eingeschränkt, insbesondere mit diesen geschnitten.

4. Verfahren nach einem der Ansprüche 1 bis 3, **dadurch gekennzeichnet, dass** die Vektoren für Adressangaben Terme umfassen, die als Tupel (*t, h, T, C*) ausgeführt sind, wobei *t* den Namen des Ortes, *h* eine optionale Hausnummer, *T* eine Liste möglicher topologischer Typen, und *C* eine Liste möglicher Länder bezeichnet, und die Vektoren für Nähenangaben Terme umfassen, die als Tupel (*k, i, d*) ausgeführt sind, wobei *k* die Art der Nähenangabe, *i* eine diesbezügliche Information, und deine optionale Distanz bezeichnet.

5. Verfahren nach Anspruch 4, **dadurch gekennzeichnet, dass** eine Verschneidung der aus den Adressangaben identifizierten Polygonkoordinaten (4) mit den aus den Nähenangaben identifizierten Polygonkoordinaten (5) erfolgt, wobei die Verschneidung je nach Art der Nähenangabe k spezifisch ist.

6. Verfahren nach Anspruch 4 oder 5, **dadurch gekennzeichnet, dass** als Art der Nähenangabe ein in der Nähe liegender Ort oder Punkt von Interesse, eine Straßenkreuzung oder der Name einer Linie oder Station des öffentlichen Verkehrs, optional mit einer Distanzangabe, herangezogen wird.

7. Verfahren nach einem der Ansprüche 1 bis 6, **dadurch gekennzeichnet, dass** die Terme des Suchvektors (1) und gegebenenfalls auch die Terme des zumindest einen weiteren Suchvektors durch Benutzereingaben gebildet oder durch semantische Analyse aus Texten, insbesondere Immobilienanzeigetexten, extrahiert werden.

8. Verfahren nach einem der Ansprüche 1 bis 7, **dadurch gekennzeichnet, dass** die Geo-Topologie in Form einer hierarchischen Baumstruktur aufgebaut ist, wobei topologische Typen nach einer hierarchischen Ordnung sortiert sind, wobei absteigend von einem höchsten topologischen Typ jedem Typ zumindest ein übergeordneter Typ sowie gegebenenfalls untergeordnete Typen zugeordnet sind.

9. Verfahren nach Anspruch 8, **dadurch gekennzeichnet, dass** die topologischen Typen Terme umfassen, die als Tupel (T, n, S, Z, g, P, J) ausgeführt sind, wobei T den semantischen Typ bezeichnet, n den Namen, S dessen Synonyme, Z zumindest eine Postleitzahl bei Gemeinden und Bezirken, g eine Geometrie, P die Referenzen zur Definition der Hierarchie, sowie J optionale weitere vorberechnete Daten.

10. Verfahren nach einem der Ansprüche 1 bis 9, **dadurch gekennzeichnet, dass** für den Vergleich des Suchvektors (1) mit der Geo-Topologie die Terme des Suchvektors (1) auf Grundlage einer vorbestimmten Rangordnung permutiert werden und die permutierten Suchvektoren mit den Term-Vektoren (3) der Geo-Topologie verglichen werden, bis jener kürzeste Term-Vektor (3) der Geo-Topologie identifiziert wird, der sämtliche Terme des permutierten Suchvektors (1) enthält.

11. Verfahren nach einem der Ansprüche 1 bis 10 **dadurch gekennzeichnet, dass** bestimmte Terme der Suchvektoren (1, 2) aufgrund ihrer Lage im Text höher gewichtet werden.

12. Verfahren nach einem der Ansprüche 3 bis 11, **dadurch gekennzeichnet, dass** zur Erweiterung der aus den Adressangaben identifizierten Polygonkoordinaten (4) um die aus den Nähenangaben identifizierten Polygonkoordinaten (5) eine konkave Hülle (6) um vorzugsweise alle identifizierten Polygonkoordinaten (4, 5) gebildet wird.

13. Verfahren nach einem der Ansprüche 3 bis 12, **dadurch gekennzeichnet, dass** bei der Erweiterung der aus den Adressangaben identifizierten Polygon koordinaten (4) um die aus den Nähenangaben identifizierten Polygonkoordinaten (5) eine vorab bestimmte Pufferzone um den Überschneidungsbereich herangezogen wird.

14. Verfahren nach Anspruch 13, **dadurch gekennzeichnet, dass** die Größe der Pufferzone in Abhängigkeit von dem aus den Nähenangaben identifizierten Term-Vektor und/oder in Abhängigkeit von weiteren im Text identifizierten Merkmalen, insbesondere einer identifizierten Distanzangabe, bestimmt wird.

15. Computerprogramm zur Durchführung eines Verfahrens nach einem der Ansprüche 1 bis 14.
